# EUROPÄISCHE PATENTSCHRIFT

(11) **EP 1 013 611 B1**
(45) Veröffentlichungstag und Bekanntmachung des Hinweises auf die Patenterteilung: **19.10.2005**
(21) Anmeldenummer: 99124687.7
(22) Anmeldetag: 11.12.1999
(51) Int. Cl.: C02F 1/28, E04D 13/08, E03B 3/02

(54) **Anordnung zur Entfernung von Schwermetallionen aus Dachablaufwässern**
System for removing heavy metals from waters collected from roofs
Système d'élimination des métaux lourds des eaux provenant des toitures

(30) Priorität: 22.12.1998 DE 19859386
(43) Veröffentlichungstag der Anmeldung: 28.06.2000
(73) Patentinhaber: KM Europa Metal AG, 49074 Osnabrück (DE)
(72) Erfinder: Priggemeyer, Sonja, Dr., 49134 Wallenhorst (DE); Priggemeyer, Stefan, Dr., 49134 Wallenhorst (DE); Harnischmacher, Werner, Dr., 49078 Osnabrück (DE); Runde, Herbert, 48268 Greven (DE); Weil, Gerhard, Prof., 49088 Osnabrück (DE)
(74) Vertreter: Ksoll, Peter

(56) Entgegenhaltungen:
- EP-A- 0 565 921
- EP-A- 0 682 968
- EP-A- 0 866 193
- DE-A- 19 807 068
- DE-U- 29 715 603
- FR-A- 2 731 421
- PATENT ABSTRACTS OF JAPAN vol. 1999, no. 12, 29. Oktober 1999 (1999-10-29) & JP 11 200572 A (MITSUBISHI PLASTICS IND LTD), 27. Juli 1999 (1999-07-27)

## Beschreibung

Metallische Werkstoffe, wie z.B. Zink, Blei oder Kupfer, die als Bedachungsmaterial oder bei Konstruktionen zur Dachentwässerung eingesetzt werden, unterliegen durch die Einwirkung von Luft und Regen der Korrosion. Die hierbei erfolgende Abgabe von Metallionen an das Dachablaufwasser ist von verschiedenen Faktoren abhängig, unter anderem von der Intensität und der Menge des jeweiligen Niederschlags. Im Zuge eines gesteigerten Umweltbewußtseins und einer verstärkten Schonung der natürlichen Wasserressourcen wird das von einem Dach ablaufende Regenwasser nicht mehr grundsätzlich über die Kanalisation einer Kläranlage zugeführt, sondern in zunehmendem Umfang aufgefangen.
Dies ist auch der Grund dafür, daß metallische Bedachungsmaterialien neuerdings einer kritischen Diskussion hinsichtlich ihrer Umweltverträglichkeit unterliegen.

In den Fällen, wo das Dachablaufwasser nicht gesammelt wird, erfolgt eine direkte Einleitung über die Kanalisation in Kläranlagen. In zunehmendem Maße läßt man Dachablaufwasser aber auch direkt versickern, so daß Einträge von Schwermetallen in die Umwelt nicht zu vermeiden sind. Eine Minimierung der Schwermetalleinträge in Böden oder Gewässer würde folglich die Umwelt entlasten bzw. den Metallgehalt des Klärschlamms in Kläranlagen verringern. Minimierte Schwermetalleinträge machen dann

Dachablaufwässer für verschiedene Anwendungen nutzbar. So könnte z.B. der Verbrauch von kostenaufwendig aufbereitetem Trinkwasser für diverse Anwendungen in Haus und Garten deutlich verringert werden.

Es ist zwar bekannt, im Bereich von Kläranlagen Neutralisierungseinrichtungen zur Ausfällung von Schwermetallen zu installieren. Dies kann aufgrund ihrer Größe aber nur zentral erfolgen. Es sind baulich aufwendige Anlagen. Außerdem können mit diesen Anlagen Dachablaufwässer nicht erfaßt werden.

Ein Dachentwässerungsystem mit einem Sorptionsfilter ist aus DE-U-297 15 603 bekannt.

Der Erfindung liegt ausgehend vom Stand der Technik die Aufgabe zugrunde, eine Anordnung zur Entfernung von Schwermetallionen aus Dachablaufwässern zu schaffen, die ohne weiteres sowohl im Rahmen von Neubaumaßnahmen als auch bei Altbauten unmittelbar am Objekt, das heißt am jeweiligen Gebäude mit vergleichsweise geringem Aufwand installiert werden kann.

Die Lösung dieser Aufgabe wird erfindungsgemäß in den Merkmalen des Anspruchs 1 erblickt.

Dementsprechend sieht die Erfindung vor, einen Filter mit einem Filtermaterial aus synthetisierten oder natürlich vorkommenden kristallinen hydratisierten Alumosilikaten mit einer Gerüststruktur zu verwenden, die Alkali- oder Erdalkaliionen enthalten und ionenaustauschende Eigenschaften besitzen. Vorteilhaft hierbei ist, daß ein derartiges Filtermaterial leicht handhabbar, kostengünstig, regenerierbar und hygienisch unbedenklich ist. Das zum Beispiel so gereinigte Dachablaufwasser kann für verschiedene Zwecke im Haushalt oder zur Garten- oder Teichbewässerung genutzt werden, ohne daß dies die Umwelt in einem merklichen Umfang belastet. Auch ermöglicht die Erfindung, daß Dachablaufwässer problemlos in Böden versickern oder in natürliche Gewässer eingeleitet werden können.

Durch erneuten Ionenaustausch kann schwermetallbeladenes Filtermaterial regeneriert und wieder in den Filtern eingesetzt werden. So werden die Kosten für den Ionenaustausch möglichst gering gehalten und natürliche Ressourcen geschont. Weiterhin können die gebundenen Schwermetalle so zurückgewonnen werden, daß sie wieder einer

Nutzung zugeführt werden können und Abfälle in einem vernachlässigbaren Umfang entstehen.

Entsprechend den Merkmalen des Anspruchs 2 ist das Filtermaterial bevorzugt durch Verbindungen aus der Gruppe der Zeolithe gebildet. Daneben können aber auch andere Materialien mit lonenaustauschereigenschaften eingesetzt werden. Natürliche Zeolithe sind z.B. Chabasit, Mordenit, Heulandit, Clinoptilolith, Laumontit, Natrolit, Analcim oder Phillipsit. Es können verschiedene Zeolithe als Mischung oder auch nur ein Zeolith eingesetzt werden. Je nach Größe der Niederschlagsfläche, der Metallart des Dachs (Zink, Kupfer oder Blei) und Höhe des Metallanteils am Bedachungsmaterial bzw. an der Dachentwässerung sind die Mengen an Filtermaterial naturgemäß unterschiedlich.

Entsprechend den Merkmalen des Anspruchs 3 kann es ferner von Vorteil sein, dem Filtermaterial Adsorptionsmittel zuzusetzen. Hierbei handelt es sich insbesondere um Aktivkohle, Eisenoxid oder Dolomit. Vorzugsweise werden Clinoptilolith oder Mischungen von Clinoptilolith mit anderen Zeolithen verwendet.

Die im Anspruch 4 gekennzeichnete spezielle Anordnung gelangt bevorzugt bei Niederschlagsflächen bis etwa 160 m² zum Einsatz. Diese Größe ergibt sich aufgrund der hierbei in der Regel zum Einsatz gelangenden DN 100-Fallrohre. Der Filter ist als Doppelrohrpatrone mit Innenrohr und Außenrohr sowie aus in den Ringraum zwischen dem Innenrohr und dem Außenrohr eingefülltem Filtermaterial ausgebildet. Er ist in das oberhalb des Erdbodens liegende Standrohr einer Dachentwässerung austauschbar eingegliedert. Das Standrohr schließt üblicherweise DN 100-Fallrohre zum Erdboden hin ab. Da das Standrohr meistens über eine verschiebbare Standrohrkappe mit dem Fallrohr gekoppelt ist, kann nach dem Hochschieben der Standrohrkappe das Standrohr verschwenkt und dann der Filter vergleichsweise problemlos gewechselt werden.

Bei normalem Regen fließt das Dachablaufwasser an der Innenseite des Fallrohrs entlang und gelangt dann automatisch in den mit dem Filtermaterial gefüllten Ringraum zwischen dem Außenrohr und dem Innenrohr. Die Fließgeschwindigkeit kann hierbei so gewählt werden, daß die üblicherweise anfallenden Niederschlagsmengen einwandfrei erfaßt werden. Bei starkem Regen kann überschüssiges Wasser ohne weiteres durch das Innenrohr abfließen. Interne Untersuchungen haben ergeben, daß derartige Dachablaufwässer dann nur geringe Metallkonzentrationen aufweisen. Diese können somit bedenkenlos unfiltriert abfließen. Auch erlaubt es das Innenrohr, daß Blätter und Äste, insbesondere bei stärkeren Regenfällen, mit dem Dachablaufwasser problemlos durch das Innenrohr in die Kanalisation ausgetragen werden können.

Eine vorteilhafte Eigenschaft des Filtermaterials besteht darin, daß es nach Beendigung eines Regenereignisses trocken laufen kann. Das Trockenlaufen des Filters hat keinen Einfluß auf die Trennleistung oder Metallaufnahme durch das Filtermaterial. Vielmehr hat das Trockenlaufen des Filters sogar einen gewissen Vorteil im Hinblick auf eine potentielle Verstopfung des Filters durch Schmutzpartikel im Dachablaufwasser. Durch das ständige Eintrocknen dieser Schmutzpartikel und der damit einhergehenden Konsistenzänderung wird die Verstopfungsgefahr reduziert.

Die Abmessungen des Filters und somit seine Kapazität hängen vom Außendurchmesser des Standrohrs und vom Innendurchmesser des Innenrohrs ab. Um eine Verstopfung durch Blätter oder Äste sicher zu vermeiden, sollte der Innendurchmesser des Innenrohrs mindestens 30 mm betragen. Maximal dürfte ein Innendurchmesser von 100 mm zweckmäßig sein. Aufgrund des in der Regel vorhandenen Abstands des Fallrohrs zu der angrenzenden Hauswand sowie aus optischen Überlegungen kann der Außendurchmesser des Standrohrs zwischen etwa 100 mm und 250 mm betragen. Die Höhe des Filters liegt zwischen ca. 300 mm und 1800 mm. Im Rahmen dieser Eckdaten wird die Größe des Filters an die jeweiligen Einsatzbedingungen, hier insbesondere an die Niederschlagsflächen, angepaßt.

Der Filter wird bevorzugt gemäß den Merkmalen des Anspruchs 5 ausgebildet. Hierbei ist das untere Ende des Außenrohrs nach innen umgebördelt. Es bildet dort eine Begrenzung für das am unteren Ende nach außen umgebördelte Innenrohr. Die radiale Erstreckung des Ringraums zwischen dem Innenrohr und dem Außenrohr wird ferner durch einen Abstandshalter bestimmt, der am oberen Ende des Innenrohrs vorgesehen ist. Dieser Abstandshalter kann beispielsweise durch eine Ringscheibe gebildet sein, die am Außenumfang des Innenrohrs befestigt ist. Ein solcher Filter ist einfach herzustellen und problemlos auszuwechseln.

Die Anordnung entsprechend den Merkmalen des Anspruchs 6 wird bevorzugt dann eingesetzt, wenn Niederschlagsflächen oberhalb etwa 160 m² vorhanden sind und wenn das Bedachungsmaterial hauptsächlich aus Metall besteht. Der Schachtsammler befindet sich in der Regel am Ende der Dachentwässerung unterhalb des Erdbodens und weist einen lösbaren Deckel auf. In diesen Schachtsammler wird nunmehr der Filter so eingebaut, daß eine kompakte Säule aus Filtermaterial vorhanden ist. Diese Säule ist zu der Innenseite des Schachtsammlers wenigstens bereichsweise im Abstand angeordnet, so daß dieser Abstand als Überlauf dient. Aufgrund der kompakten Säule ist dieser Filter in der Lage, auch größere Mengen an Dachablaufwässer zu filtrieren. Abstandsvorgaben oder optische Bedingungen brauchen nicht berücksichtigt zu werden, da der Schachtsammler vom Volumen groß genug ist, um hier die entsprechende Menge an Filtermaterial unterzubringen. Dabei ist es möglich, ihn durch Änderung der Filterquerschnittsfläche in weiten Bereichen den örtlichen Metallfrachten und Niederschlagsflächen exakt anzupassen.

Der Deckel des Schachtsammlers erlaubt es, das Filtermaterial regelmäßig zu beobachten und im Bedarfsfall auszutauschen.

Die Höhe der Kompaktsäule im Schachtsammler kann zwischen 200 mm und 1000 mm betragen. Der Durchmesser der Säule beträgt zwischen 100 mm und 600 mm.

Damit das dem Filter zugeführte Dachablaufwasser möglichst gleichmäßig über den gesamten Querschnitt der kompakten Filtersäule verteilt wird, sieht der Anspruch 7 vor, daß oberhalb des Filters eine Wasserverteilung angeordnet ist. Hierbei kann es sich insbesondere um eine sogenannte Verteilungsspirale handeln. Auf diese Weise wird vermieden, daß Dachablaufwasser nur in einen bestimmten Bereich des Filters tropft, der dann schnell gesättigt ist und die Filtrierleistung des Filters abnimmt, obwohl seine Gesamtkapazität noch lange nicht erschöpft ist.

Im Hinblick auf die kompakte Ausgestaltung des Filters besteht die Gefahr, daß sich Schmutz oder Blätter auf der Oberfläche des Filtermaterials konzentrieren und so den Filter verstopfen. Zur Vermeidung dieses Mangels ist gemäß Anspruch 8 im unteren Höhenbereich der Dachentwässerung vor dem Schachtsammler ein Fremdkörperfang angeordnet. Dieser Fremdkörperfang kann entweder direkt in dem Fallrohr der Dachentwässerung oder unmittelbar am Einlauf in den Schachtsammler angeordnet werden.

Die Erfindung ist nachfolgend anhand von in den Zeichnungen dargestellten Ausführungsbeispielen näher erläutert. Es zeigen:
- Figur 1: im vertikalen Schemaschnitt eine Anordnung zur Entfernung von Schwermetallionen aus Dachablaufwässern;
- Figur 2: im vertikalen Schemaschnitt ein Außenrohr für einen Filter dieser Anordnung;
- Figur 3: im vertikalen Schemaschnitt ein Innenrohr des Filters der Anordnung;
- Figur 4: im vertikalen Schemaschnitt den zusammengebauten Filter der Anordnung;
- Figur 5: im vertikalen Schemaschnitt eine weitere Ausführungsform einer Anordnung zur Entfernung von Schwermetallionen aus Dachablaufwässern.

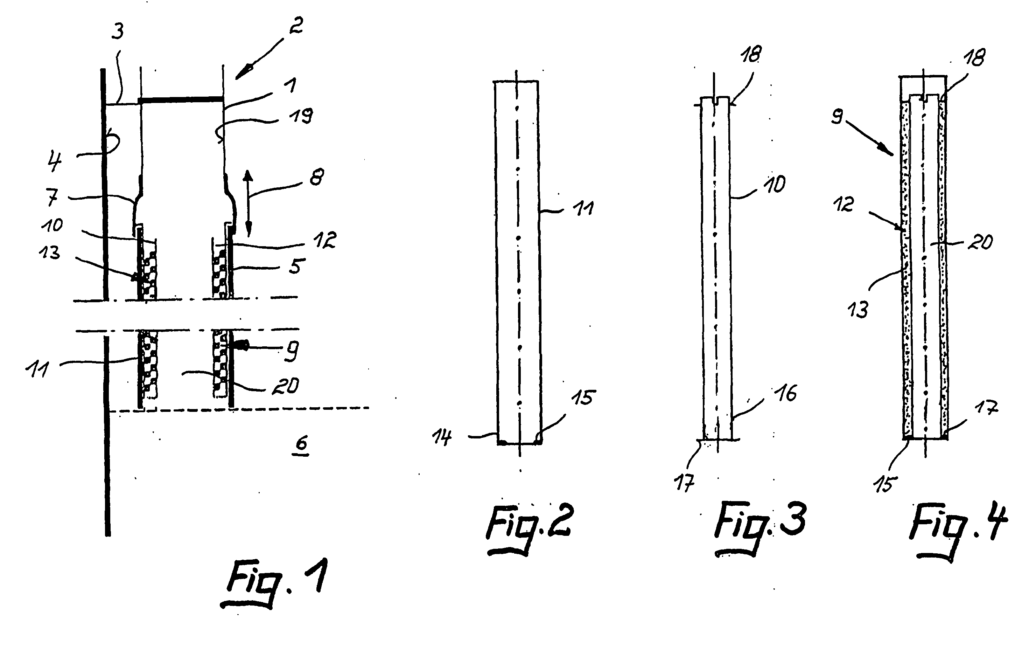

Mit 1 ist in der Figur 1 das Fallrohr einer Dachentwässerung 2 bezeichnet. Das Fallrohr 1 ist über eine Klemmschelle 3 mit Abstand an einer Hauswand 4 befestigt.
Das untere Ende der Dachentwässerung 2 wird von einem Standrohr 5 gebildet, das sich oberhalb des Erdbodens 6 erstreckt. Das Fallrohr 1 und das Standrohr 5 sind durch eine Standrohrkappe 7 gekoppelt, die gemäß dem Pfeil 8 vertikal verlagerbar ist.

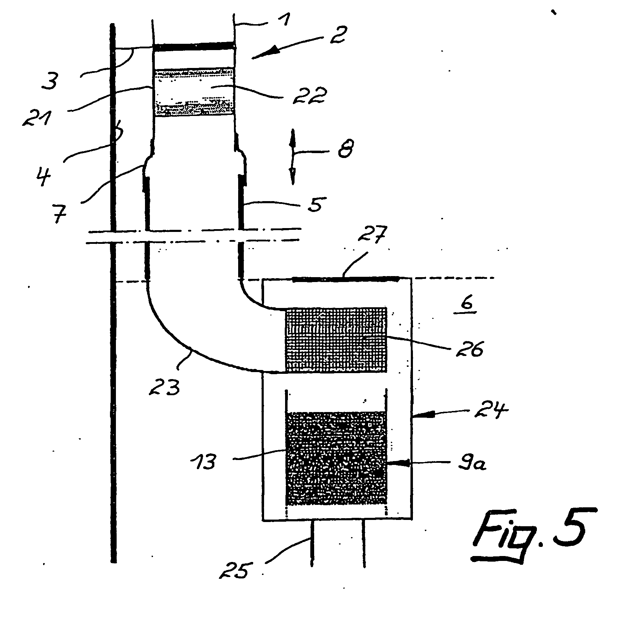

In das Standrohr 5 ist ein aus den Figuren 2 bis 4 näher erkennbarer Filter 9 zur Entfernung von Schwermetallionen aus Dachablaufwässern eingegliedert. Der Filter 9 ist als Doppelrohrpatrone mit Innenrohr 10 und Außenrohr 11 sowie aus in den Ringraum 12 zwischen dem Innenrohr 10 und dem Außenrohr 11 eingefülltes Filtermaterial 13 gestaltet. Das Filtermaterial 13 besteht beim Ausführungsbeispiel aus einem natürlichen Zeolith. Wie die Figur 2 erkennen läßt, ist das Außenrohr 11 am unteren Ende 14 nach innen hin umgebördelt. Dadurch ergibt sich ein kreisringförmiger Boden 15. Das Innenrohr 10 ist gemäß Figur 3 am unteren Ende 16 nach außen umgebördelt. Hierdurch wird ein äußerer Ringflansch 17 gebildet. Wird das Innenrohr 10 gemäß Figur 4 in das Außenrohr 11 eingeschoben, findet somit das Innenrohr 10 eine Abstützung am Außenrohr 11 und es wird auch am unteren Ende der Ringraum 12 fixiert. Zur Fixierung des Ringraums 12 am oberen Ende des Innenrohrs 10 ist ein Abstandshalter 18 in Form eines Ringkragens vorgesehen.

Der Filter 9 gemäß Figur 4 wird komplett in das Standrohr 5 eingesetzt, wozu lediglich die Standrohrkappe 7 nach oben geschoben und das Standrohr 5 von der Hauswand 4 abgeschwenkt werden muß.

Bei normalem Regen oder Nieselregen fließt das Dachablaufwasser an der Innenseite 19 des Fallrohrs 1 entlang und gelangt somit direkt in den kreisringförmigen Bereich des Filtermaterials 13. Fallen größere Niederschlagsmengen an, können diese auch über den Innenraum 20 des Filters 9 abfließen.

Beim Ausführungsbeispiel der Figuren 1 bis 4 ist ein typisches Dach mit ca. 100 m² Niederschlagsfläche und einem Metallanteil an der Niederschlagsfläche von ca. 10 % angenommen. In diesem Fall beträgt die Standzeit bei einem Fallrohr 1 mit 100 mm Durchmesser und einem Außendurchmesser des Filters 9 von 150 mm sowie einer Höhe von 1000 mm bei einer Befüllung von ca. 7 kg Filtermaterial 13 ca. vier Jahre.

Die in der Figur 5 veranschaulichte Anordnung zur Entfernung von Schwermetallionen aus Dachablaufwässern dient zur Filtration von Metalldächern mit einer Niederschlagsfläche > 160 m².

Auch in diesem Fall ist das Fallrohr 1 einer Dachentwässerung 2 über eine Befestigungsschelle 3 an einer Hauswand 4 befestigt. Im unteren Ende 21 des Fallrohrs 1 befindet sich ein Fremdkörperfang 22, insbesondere für Äste und Laub. Das am unteren Ende oberhalb des Erdbodens 6 befindliche Standrohr 5 ist ebenfalls über eine Standrohrkappe 7 mit dem Fallrohr 1 gekoppelt. Die Standrohrkappe 7 ist gemäß dem

Pfeil 8 vertikal bewegbar. An das Standrohr 5 schließt sich ein Krümmer 23 an, der in einen unterhalb des Erdbodens 6 verlegten

Schachtsammler 24 führt, der an die Kanalisation 25 angeschlossen ist. In diesem Schachtsammler 24 ist ein Filter 9a in Form einer kompakten Säule aus Filtermaterial 13 angeordnet. Oberhalb des Filtermaterials 13 befindet sich eine Wasserverteilung 26 in Form einer Verteilungsspirale.

Der Schachtsammler 24 weist einen Deckel 27 auf, über den das Filtermaterial 13 gewartet und innerhalb der üblichen Perioden regelmäßig ausgetauscht werden kann.

### Bezugszeichenaufstellung

- 1 -: Fallrohr v. 2
- 2 -: Dachentwässerung
- 3 -: Klemmschelle
- 4 -: Hauswand
- 5 -: Standrohr
- 6 -: Erdboden
- 7 -: Standrohrkappe
- 8 -: Pfeil
- 9 -: Filter
9a - Filter
9b - Filter
- 10 -: Innenrohr v. 9
- 11 -: Außenrohr v. 9
- 12 -: Ringraum zw. 10 u. 11
- 13 -: Filtermaterial
- 14 -: unteres Ende v. 11
- 15 -: Boden v. 11
- 16 -: unteres Ende v. 10
- 17 -: Ringflansch an 16
- 18 -: Abstandshalter
- 19 -: Innenseite v. 1
- 20 -: Innenraum v. 9
- 21 -: unteres Ende v. 1
- 22 -: Fremdkörperfang
- 23 -: Krümmer
- 24 -: Schachtsammler
- 25 -: Kanalisation
- 26 -: Wasserverteilung
- 27 -: Deckel v. 24

## Patentansprüche

1. Dachentwässerungssystem mit einer Filteranordnung für Dachablaufwässer, die einen Filter (9,9a) aufweist, der in eine Dachentwässerung (2) ein geglieder ist und der Filter (9, 9a) mit einem Filtermaterial (13) ausgestattet ist, welches Schwermetallionen aus den Dachablaufwässern entfernt, **dadurch gekennzeichnet, dass** das Filtermaterial (13) aus synthetisierten oder natürlich vorkommenden kristallinen hydratisierten Alumosilikaten mit Gerüststruktur besteht, die Alkali- oder Erdalkaliionen enthalten.

2. Dachentwässerungssystem nach Anspruch 1, **dadurch gekennzeichnet, dass** das Filtermaterial (13) aus der Gruppe der Zeolithe gebildet ist.

3. Dachentwässerungssystem nach Anspruch 1 oder 2, **dadurch gekennzeichnet, dass** dem Filtermaterial (13) Adsorptionmittel zugesetzt sind.

4. Dachentwässerungssystem nach einem der Ansprüche 1 bis 3, **dadurch gekennzeichnet, dass** der Filter (9) in das oberhalb des Erdbodens (6) liegende Standrohr (5) einer Dachentwässerung (2) austauschbar eingegliedert ist und aus einer Doppelrohrpatrone mit Innenrohr (10) und Außenrohr (11) sowie aus in den Ringraum (12) zwischen dem Innenrohr (10) und dem Außenrohr (11) eingefülltem Filtermaterial (13) besteht.

5. Dachentwässerungssystem nach Anspruch 4, **dadurch gekennzeichnet, dass** das untere Ende (14) des Außenrohrs (11) und das untere Ende (16) des Innenrohrs (10) nach außen umgebördelt sind, und dass am oberen Ende des Innenrohrs (10) mindestens ein die Breite des Ringraums (12) bestimmender Abstandshalter (18) vorgesehen ist.

6. Dachentwässerungssystem nach einem der Ansprüche 1 bis 3, **dadurch gekennzeichnet, dass** der Filter (9a) in einen unterhalb des Erdbodens (6) liegenden Schachtsammler (24) einer Dachentwässerung (2) eingegliedert ist und das Filtermaterial (13) in Form einer kompakten Säule aufweist, welche mindestens bereichsweise im Abstand zur Innenseite des Schachtsammlers (24) angeordnet ist.

7. Dachentwässerungssystem nach Anspruch 6, **dadurch gekennzeichnet, dass** oberhalb des Filters (9a) eine Wasserverteilung (26) vorgesehen ist.

8. Dachentwässerungssystem nach Anspruch 6 oder 7, **dadurch gekennzeichnet, dass** im unteren Höhenbereich der Dachentwässerung (2) vor dem Schachtsammler (24) ein Fremdkörperfang (22) vorgesehen ist.

## Claims

1. Roof drainage system comprising a filter arrangement for roof run-off water, which has a filter (9, 9a), which is incorporated into a roof drainage device (2) and the filter (9, 9a) is equipped with a filter material (13), which removes heavy metal ions from the roof run-off water, **characterised in that** the filter material (13) consists of synthesised or naturally occurring crystalline hydrated aluminosilicates with a skeleton structure, which contain the alkaline or alkaline earth ions.

2. Roof drainage system according to claim 1, **characterised in that** the filter material (13) is formed from the zeolite group.

3. Roof drainage system according to claim 1 or 2, **characterised in that** adsorption means are added to the filter material (13).

4. Roof drainage system according to any one of claims 1 to 3, **characterised in that** the filter (9) is incorporated so as to be replaceable into the standpipe (5) of a roof drainage device (2) located above the ground (6) and consists of a double pipe cartridge with an inner pipe (10) and outer pipe (11) and of filter material (13) filled into the annular space (12) between the inner pipe (10) and the outer pipe (11).

5. Roof drainage system according to claim 4, **characterised in that** the lower end (14) of the outer pipe (11) and the lower end (16) of the inner pipe (10) are outwardly crimped and **in that** at least one spacer (18) determining the width of the annular space (12) is provided at the upper end of the inner pipe (10).

6. Roof drainage system according to any one of claims 1 to 3, **characterised in that** the filter (9a) is incorporated into a collector well (24) of a roof drainage device (2) located below the ground (6) and has the filter material (13) in the form of a compact column, which is arranged at a spacing from the inside of the collector well (24) at least in regions.

7. Roof drainage system according to claim 6, **characterised in that** a water distributor (26) is provided above the filter (9a).

8. Roof drainage system according to claim 6 or 7, **characterised in that** a foreign body trap (22) is provided in the lower height range of the roof drainage device (2) prior to the collector well (24).

## Revendications

1. Système de drainage de toit comportant un système de filtre destiné à des eaux de toit et muni d'un filtre (9, 9a) incorporé dans un drainage de toit (2) et le filtre (9, 9a) est muni d'un matériau de filtre (13) qui élimine des ions de métaux lourds dans les eaux de toit,
**caractérisé en ce que**
le matériau de filtre (13) est composé d'aluminosilicates à structure de squelette, hydratés cristallins, entièrement naturels ou synthétiques, et qui contiennent des ions alcalins ou alcalino-terreux.

2. Système de drainage de toit selon la revendication 1,
**caractérisé en ce que**
le matériau de filtre (13) est un matériau du groupe des zéolites.

3. Système de drainage de toit selon la revendication 1 ou 2,
**caractérisé en ce que**
un moyen d'adsorption est ajouté au matériau de filtre (13).

4. Système de drainage de toit selon l'une des revendications 1 à 3,
**caractérisé en ce que**
le filtre (9) est incorporé de façon amovible dans le tuyau en fonte (5) - situé au-dessus du sol (6) - d'un drainage de toit (2) et comprend une cartouche à double tuyau comportant un tuyau intérieur (10) et un tuyau extérieur (11) ainsi qu'un matériau de filtre (13) placé dans l'espace annulaire (12) entre le tuyau intérieur (10) et le tuyau extérieur (11).

5. Système de drainage de toit selon la revendication 4,
**caractérisé en ce que**
l'extrémité inférieure (14) du tuyau extérieur (11) et l'extrémité inférieure (16) du tuyau intérieur (10) sont rabattues vers l'extérieur, et au moins un écarteur (18) qui détermine la largeur de l'espace annulaire (12) est prévu à l'extrémité supérieure du tuyau intérieur (10).

6. Système de drainage de toit selon l'une des revendications 1 à 3,
**caractérisé en ce que**
le filtre (9a) est incorporé dans un collecteur de descente (24) - d'un drainage de toit (2) - placé au-dessous du sol (6) et comporte le matériau de filtre (13) sous forme d'une colonne compacte, écartée au moins par endroits du côté intérieur du collecteur de descente (24).

7. Système de drainage de toit selon la revendication 6,
**caractérisé en ce qu'**
un répartiteur d'eau (26) est prévu au-dessus du filtre (9a).

8. Système de drainage de toit selon la revendication 6 ou 7,
**caractérisé en ce que**
dans la zone de hauteur inférieure du drainage de toit (2) un intercepteur de corps étrangers (22) est prévu en amont du collecteur de descente (24).
